# EUROPEAN PATENT SPECIFICATION

(11) **EP 4 269 064 B1**
(45) Date of publication and mention of the grant of the patent: **01.04.2026**
(21) Application number: 23170443.8
(22) Date of filing: 27.04.2023
(51) Int. Cl.: B29C 48/305, B29C 48/154, B29C 48/155, B05D 1/26, B05C 5/02, B05C 1/08, B29C 48/08, B05D 1/30, H01M 4/04, H01M 10/0585

(54) **SYSTEM FOR DEPOSITING MATERIAL ON A SUBSTRATE AND METHOD FOR MANUFACTURING A BATTERY**
SYSTEM ZUM AUFBRINGEN VON MATERIAL AUF EINEM SUBSTRAT UND VERFAHREN ZUR HERSTELLUNG EINER BATTERIE
SYSTÈME DE DÉPÔT DE MATÉRIAU SUR UN SUBSTRAT ET PROCÉDÉ DE FABRICATION D'UNE BATTERIE

(30) Priority: 28.04.2022 EP 22170498
(43) Date of publication of application: 01.11.2023
(73) Proprietor: LG Energy Solution, Ltd., Seoul 07335 (KR)
(72) Inventor: LEE, Mun Gu, 34122 Daejeon (KR); LEE, Seung Hyun, 34122 Daejeon (KR); SONG, Min Sok, 34122 Daejeon (KR); KIM, Jong Oh, 34122 Daejeon (KR)
(74) Representative: Goddar, Heinz J.

(56) References cited:
- EP-A2- 0 578 469
- EP-B1- 1 879 246
- JP-A- 2002 126 598
- JP-A- 2015 229 151
- JP-A- H09 134 722
- JP-A- H11 242 957
- US-A1- 2011 223 337
- US-A1- 2011 236 570
- US-B2- 8 728 580

## Description

### TECHNICAL FIELD

This application relates to deposition of a material, in particular deposition of a material mixture. The deposition may form part of a manufacturing process of a battery, in particular of a secondary battery.

### TEHCNICAL PROBLEM

In some manufacturing processes, such as a manufacturing process of a battery, it may be advantageous to deposit a material such to have a specific thickness profile on a substrate. In particular, depending on the design configuration, it may be advantageous to deposit a material uniformly over a substrate except of one or more areas that extend along the principal deposition direction. Hence, a technical problem may be increasing an accuracy in generating a specific thickness profile of a deposited material on a substrate.

JP 2015-229151 discloses a coating device including a first die for leading out a coating liquid; a second die which is opposed to the first die at an interval; and a shim sandwiched between the first die and the second die. The shim is provided with a slit having a communication part which communicates with the lead-out port and an opening end which discharges the coating liquid led out from the lead-out port toward a coating object and having such a tapered shape that an opening width becomes narrower toward the opening end from the communication part and the opening end of the slit is located on the outer side than the end part of the first die and the end part of the second die.

EP 578 469 A2 discloses an apparatus and methods for applying an insulating coating material onto electronic circuit boards. A slot nozzle die has elongated air slots along the slot extrusion opening. In the operation of the apparatus, the air flow is initiated from both air slots prior to the initiation of the coating material flow. The air flow carries the film coating material to the circuit board for deposition in discrete areas thereon.

JP H09134722 A discloses an assembly for making the thickness of paste applied to two surfaces of a core metal passing through a slit more uniform. When the core metal is passing through the slit, edge-shaped combteeth mounted on an aligning jig hold the core metal from the two surfaces to generate location in the center of the gap of slit. Accordingly, the paste can be applied uniformly to both surfaces of the core metal with the same thickness.

JP 2002-126598 A discloses an application method and an application apparatus in which an applicator is not stopped in the coating of a product having various base material widths and application widths by one die nozzle. A block for regulating the application width is installed in the tip part liquid bank of a slot which is formed between a front edge and a doctor edge, and when a coating liquid is applied on a continuously traveling base material, the position of the block is adjusted correspondingly to the change in the application width of each coated product.

US 2011/236570 A1 discloses an extrusion coating apparatus applying the coating solution to the substrate through a bead in a state in which a continuously running belt-like substrate and a lip surface on an upstream side and a downstream side in the substrate running direction are adjacent to each other. The apparatus includes a manifold to which a coating solution is supplied, a coating solution discharge opening discharging the coating solution onto the lip surface to the substrate through a slit through which the coating solution is passed from the manifold, and a spacer for regulating a coating width is provided in both end portions in a width direction of the slit.

US 8,728,580 B2 discloses an assembly in which the tip of a downstream lip is disposed so as to be further separated from a web as compared to the tip of an adjacent lip, and downstream and upstream spacers are placed so that the a liquid discharge port length interposed between two downstream spacers is shorter than that of a liquid discharge port interposed between two upstream spacers.

EP 1 879 246 A1 discloses a method in which an electrode mixture paste is applied on both sides of a strip of core material as it runs along its lengthwise direction, and the coating thickness of the paste is adjusted as the core material coated with the paste passes through a gap between a pair of scraper tools. Tips provided to the scraper tools scrape off the paste to form a paste-coated portion of a predetermined width.

JP H11242957 A discloses an electrode-paste applying device having a supporting base-material carrying mechanism for carrying a strip-like supporting base material, a paste tank for storing electrode paste applied to a main surface of the strip-like base material by its carry and passage, first layer-thickness adjusting blades keeping sliding contact with a surface of the applied electrode paste for adjusting/controlling the thickness of an applied layer, and an auxiliary blade mounted on the first layer-thickness adjusting blades for forming solid regions by selectively scraping off the applied layer of the electrode paste.

US 2011/223337 A1 discloses an extrusion coating apparatus which can control the coating shape in end portions regardless of the coating thickness and can suppress high edges. The extrusion coating apparatus includes a coating width regulating plate inserted into both end portions of a slit, a slit die discharging the coating solution from a discharge opening of the slit, and a chamber depressurizing in a web running direction on an upstream side. The coating width regulating plate has a protruded portion bent toward the web downstream side and facing the web. The coating solution is applied to the web in a state in which the coating solution is oozed on a web facing surface of the protruded portion of the coating width regulating plate by depressurization of the chamber.

### SUMMARY OF INVENTION

The technical problems can be solved by the subject matter as defined in the independent claims. Particular embodiments are given by the features of the dependent claims.

A system for depositing a material on a substrate is provided. The system comprises a die. The die is configured for extruding the material along a principal deposition direction through the opening of the die. The die comprises a cavity and a protrusion portion arranged in the cavity. The die comprises an opening. The cavity is configured for receiving the material. The cavity is fluidly connected to the opening of the die. The die comprises a base portion aligned to a backside of the die, the base portion being elongated in a width direction perpendicular to the principal deposition direction and expanding over an entire width of the cavity, and two separation portions each extending from the base portion in the principal deposition direction. Two separation portions are each extending from the base portion in the principal deposition direction along a respective lateral boundary of the cavity of the die. The protrusion portion is configured for shaping a flow of the material extruded from the die. The protrusion portion extends through (and/or in or inside) the cavity and extends out of the opening. The die is configured to deposit material with a reduced thickness in a position on the substrate corresponding to a size and a position of the protrusion portion.

The system and method as disclosed herein may be used and carried out to manufacture a battery. The battery as used herein may generally include or be any of a primary battery, a secondary battery, or, more generally, an electrochemical cell for energy storage, unless indicated otherwise or technically inappropriate. In particular, the battery as used herein may refer to a secondary battery, i.e., a rechargeable battery. For example, the battery may comprise one or more layers of electrodes and one or more layers of separators stacked in a specific manner. The battery may be a coin-type, cylindrical, prismatic, or pouch-type battery. Particularly, the battery may be configured to provide power to an electric vehicle. Hereinafter, a reference will be made to "a" battery, in order not to limit the subject matter to the manufacture of one particular battery. Alternatively or additionally, the battery may refer to a primary battery or non-rechargeable battery.

The material may be also referred to as a slurry. The material may be or include a mixture of a liquid material and a solid material, and/or a material that is partly in a liquid state and partly in a solid state. Specifically, the material may refer to a mixture including a binder and a solid material admixed thereto. The material may include an active material that is used for forming an electrode of a battery, particularly a secondary battery. The electrode may be a positive electrode or a negative electrode.

The material may be extruded from the die. The extrusion process may be also referred to as deposition, in which the material is deposited on a substrate. The substrate may be an electrode substrate to form an electrode of a battery. The electrode substrate may be a metal foil made of one or more metal materials, such as copper, nickel, or aluminum.

The material deposited on the substrate may be further processed, e.g., dried, and/or activated, to obtain an electrode for a battery. For the sake of simplifying the description, the terms material, active material and slurry may be used interchangeably hereinafter, unless indicated otherwise or technically inappropriate.

The material may include an active material, which may be or include, as a non-exhaustive list of examples, lithium-cobalt oxide (LCO), lithium nickel cobalt manganese oxide (NCM), lithium nickel cobalt aluminum oxide (NCA), lithium manganese oxide (LMO), lithium nickel manganese spinel (LNMO), lithium iron phosphate (LFP). The active material may additionally include graphite, pure lithium and/or silicon.

The active material may be provided in a powder form and/or granular form. The active material may be admixed to the binder. The binder may be a polymeric binder. The binder may be or include polyvinylidene fluoride (PVDF), polymethyl acrylate (PMMA), carboxymethylcellulose (CMC), polyacrylate, xanthan gum, polyethylene glycol, or styrene butadiene. The slurry may further contain one or more liquid components. The liquid component may be or include water and/or an organic solvent, such as tetrahydrofuran (THF) or N-methyl-2-pyrrolidon (NMP).

The material may additionally contain solid conductive particles, for example carbon black and/or carbon nanotubes. The material may additionally contain dispersants. The material may additionally contain one or more liquid components. The components of the material may be given to the binder and mixed, for example, by stirring or using any suitable reactor.

The material may be a viscous material. The material may have a viscosity of 10² mPa·s or more at an atmospheric pressure (1013.25 hPa) and 25°C. More particularly, the material may have a viscosity of 10³ mPa·s or more, 10⁴ mPa·s or more, 10⁶ mPa·s or more, 10¹⁰ mPa·s or more, or 10¹² mPa·s or more at the atmospheric pressure and 25°C. An upper boundary for the viscosity may be given by the transition into the solid state and may be at or above 10²⁴ mPa·s at the atmospheric pressure and 25°C. Unless indicated otherwise, the viscosity may be determined using a viscosimeter according to the standard EN ISO 3219. Alternatively or additionally, the viscosity may be measured, for example, using a Stabinger viscometer SVM kinematic viscometer in accordance with ASTM 7042, at the atmospheric pressure and 25°C.

The die may be a device that is configured for extruding the material through the opening of the die. The die may be also referred to as an ejector, injector, deposition device or extrusion device. The die may be configured for extruding the material through the cavity and the opening of the die. The die may further include any of the corresponding features as described below.

The cavity may refer to a hollow space formed in the die. While the cavity may refer to a hollow space within the die, the cavity may be considered as a structural feature of the system and/or the cavity wherever appropriate. Accordingly, the system and/or the die may comprise the cavity.

The cavity may be provided, in particular shaped and dimensioned, so as to receive the material. The cavity may be fluidly connected to a supply system of the material. A feed port may be provided in the die in a manner fluidly connected to the cavity of the die. The feed port may be configured to enable the material to be fed to the cavity of the die.

The cavity may be fluidly connected to the opening of the die. The cavity may be configured (e.g., dimensioned and shaped) such as to allow the material that is received in the cavity to spread towards the opening and/or to discharge from the die through the opening of the die. This process may be referred to as extrusion of the material from the die and/or deposition of the material on a substrate as mentioned above.

The die may be configured to extrude the material through the opening of the die according to a flow rate and/or a pressure applied by a supply system of the material. In operation, the cavity may receive the material, i.e., be filled (partly or completely) with the material. As the cavity is filled with the material, the material may discharge from the cavity through the opening to the outside.

The cavity may be fluidly connected to the opening of the die. In particular, the gap may include two or more separate parts, such as a first die half and a second die half, or a die cover and a die base, or the like. The cavity may be formed as a gap between the two or more separate parts of the die. The opening may refer to a void area formed in a front side of the die. The opening of the die may be formed correspondingly between the two or more separate parts of the die. Alternatively, the cavity may be formed as a void space inside a body of the die, and the opening may be formed at an outer surface of the die being fluidly connected to the cavity.

In some examples, the opening has a slit-shape elongated along a width direction perpendicular to the principal deposition direction. The width direction may be parallel to, or lie within, the front side of the die. The opening may have a height, particularly a uniform height. The cavity may have a height, particularly a uniform height. Particularly, the opening and the cavity may have a same uniform height. Herein, the height may be determined along a height direction perpendicular to the width direction and the principal deposition direction. Herein, a height being uniform may indicate that the height is locally invariant, i.e., the extension in the height direction does not vary in any position of the respective element.

The principal deposition direction may refer to a direction in which the material is extruded from/by the die. In other words, the principal deposition direction may indicate a direction along which the material is extruded from the opening of the die. Since the material may be a flowable (viscous) material as specified herein, the material may spread out after discharging from the die. Here, the principal deposition direction may refer to an averaged direction over all directions in which the material is extruded from the opening of the die. Alternatively or additionally, the principal deposition direction may correspond to a flow direction of the material from the cavity towards the opening of the die. As such, the principal deposition direction may be determined by a positional relation of the opening of the die to the cavity.

The protrusion portion may extend through the cavity and out of the opening. As such, the protrusion portion may protrude from the die to the outside. The protrusion portion may be a structural element, e.g., made of a solid material, such as metal, steel or synthetic material. The protrusion portion may be elongated along the principal deposition direction. Since the protrusion portion extends inside and outside of the cavity, the protrusion portion may be configured to shape the flow of the material accordingly, e.g., such that the material may flow in an aligned manner along the principal deposition direction. The protrusion portion may further include any of the corresponding features as described below.

In some examples, the protrusion portion is provided so as to be removable from the die. In other examples, the protrusion portion is an integral part of the die. These options are further discussed in detail below.

In particular, since the protrusion portion extends out of the opening to the outside of the die, the protrusion portion may lead to a reduced thickness of the material after the extrusion (i.e., after the deposition on a substrate as described above) corresponding to the size and position of the protrusion portion.

Accordingly, the subject matter disclosed herein may allow for a more precise control of a thickness profile of a deposited material than conventional systems and methods. The system or method disclosed herein may facilitate the deposition of the material according to a specific thickness profile. In particular, the use of the protrusion portion that extends out of the opening of the die, and thus protruding from the die, during a deposition process may reduce the thickness of the material corresponding to a position and a width of the protrusion portion. Accordingly, a thickness profile of the material being deposited by the system disclosed herein may be precisely controlled. For this purpose, the protrusion portion may be specifically configured, for example by being specifically shaped and dimensioned.

Particularly, the material may be or include a positive electrode material of a secondary battery. It may be desirable that the thickness of the deposited positive electrode material is reduced in one or more specific positions. In a specific example, an electrode assembly may comprise a positive electrode and a negative electrode arranged on opposite sides of a separator sheet. In such an example, it may be desirable that the thickness of the positive electrode material is smaller than a thickness of the negative electrode material on the reverse side of the separator sheet. To ensure that this requirement is fulfilled also in a position where the thickness of the negative electrode is locally reduced, it may be advantageous to reduce also the thickness of the positive electrode material in the exactly corresponding position. This may prevent an undesirable crystallization of a component of the material, in particular lithium, due to an excess of the positive electrode material compared to the negative electrode material at a corresponding position on the reverse side.

The system may be implemented as a single apparatus or a single device, or as a distributed system comprising multiple apparatuses or devices. As discussed below, the system may further comprise a transport device, such as a coating roll, to convey a substrate, on which the material is to be deposited, to the die.

The die may further comprise a manifold. The cavity may be fluidly connected with the manifold. The manifold may have an elongated shape along a direction perpendicular to the principal deposition direction of the die. The manifold may be provided as a recess at an inner surface of the die that encompasses the cavity. The manifold may also be fluidly connected with a supply system that delivers the material to the manifold.

The system further comprises a base portion arranged inside the cavity. The protrusion portion may be physically connected to the base portion and may extend from the base portion through the opening to the outside of the die. The base portion may further include any of the corresponding features as described below.

The base portion may be provided in a manner physically separate from the die. The protrusion portion may be integrally formed with the base portion. Hence, the base portion and the protrusion portion may be provided in a manner physically separate from the die (and yet be parts of the die within the meanings of the subject matter disclosed herein). For example, the extrusion portion and the base portion may be part of a flow guide (which may also be referred to as a shim, an interposer, or the like) that is described below. Alternatively, the base portion may be provided as an integral part of the die.

The base portion may contribute to aligning the protrusion portion in relation to the die, particularly to the cavity and/or to the opening of the die. For example, the die may comprise an arrest member on a backside of the die that is opposite to a front side of the die, in which the opening of the die is formed. The base portion may have a backside wall to rest against the arrest member of the die such as to properly position the base portion, and thus the protrusion portion, in the cavity of the die.

Additionally or alternatively, the base portion may contribute to maintaining the cavity, particularly in examples when the cavity is formed between two or more separate parts of the die. In such examples, the base portion may be arranged on a bottom die and support an upper die in terms of the gravitational pull. Accordingly, the height of the cavity of the die may correspond to a height of the base portion.

The base portion has an elongated shape along a width direction perpendicular to the principal deposition direction. The protrusion portion has an elongated shape along the principal deposition direction.

In particular, the base portion may be configured to prevent the material in the cavity to flow in a direction opposite to the principal deposition direction. For example, the base portion may extend over an entire width, or at least a major part of the width, of the cavity of the die so as to prohibit any flow of the material to the backside of the die. For example, the base portion may have a beam-like shape, a bar-like shape or the like. In particular, the height of the cavity of the die may correspond to the height of the base portion as mentioned above, such that a flow of the material to the backside of the die is effectively prevented by the base portion.

In some examples, the protruding portion has a tip portion that has a thickness smaller than a height of the opening. At least a part of the tip portion may be arranged outside of the die. This may allow for a more precise control of the thickness of the deposited material by means of a proper configuration of the protrusion portion.

The system further comprises two separation portions extending from the base portion in an elongated manner along the principal deposition direction inside the cavity. The one or more separation portions may be configured to shape the flow of the material extruded from the die. In particular, the one or more separation portions may contribute to reducing the thickness of the material extruded from the die, however to a smaller degree (i.e., resulting in a higher thickness) than the protrusion portion does.

A separation portion may be considered as a minus-offset portion to indicate that the front side of the separation portion is offset inwardly (into the cavity) with respect to a front side of the die. Furthermore, outermost side portions may be used to prevent the material from escaping on the sides of the die.

The one or more separation portions may be formed integrally with the base portion. Additionally, the one or more separation portions may be formed integrally with the protrusion portion. As mentioned above, the base portion and the protrusion portion may be formed integrally in a manner physically separate from the die. Alternatively, the one or more separation portions may be formed integrally with the die.

In some examples, the system further comprises at least one additional protrusion portion extending through the cavity and out of the opening of the die. Each of the additional protrusion portion may include any of the features of the protrusion portion as disclosed herein. This may allow for configuring a more complex thickness profile of the material extruded from the die. In particular, each of the multiple protrusion portions may be configured individually according to specific demand and specific product requirements.

In some examples, the cavity has a uniform height in a thickness direction perpendicular to the principal deposition direction. A thickness of the base portion is equal to the height of the cavity. As such, the base portion, and optionally also the protrusion portion, may support an upper die in terms of the gravitational pull. Alternatively, the base portion may be configured to fit tightly in the cavity of the opening by having the same uniform (i.e., locally invariant) height.

In some examples, the system further comprises a flow guide that is partly arranged in the cavity. In such examples, the protrusion portion is part of the flow guide. The flow guide may refer to a physical member that is separate from the die (and yet considered part of the die) and configured to be inserted into the cavity of the die. As mentioned above, the protrusion portion and/or the base portion may be provided in a manner physically separate from the die, while still being parts of the die in terms of the present disclosure. The base portion and the protrusion portion may be parts of the flow guide that is provided in a manner physically separate from the die. The flow guide may be configured, particularly by means of the protrusion portion and the base portion, to shape the flow of the material extruded from the die. The flow guide may also be referred to as a spacer, an interposer or a shim. In particular, the flow guide comprising the protrusion portion as disclosed herein may be referred to as a plus-offset shim.

In some examples, the flow guide may have one or more positioning features for alignment and/or fixation of the flow guide to the die. Such positioning features may be or include physical features, such as a hole, a bulge, a pin, a groove, a slope, an arrest member, a strike member or the like, or any combination of the foregoing. Particularly, the cavity of the die may be provided with a respectively corresponding and/or respectively complementary positioning feature for alignment and/or fixation of the flow guide to the die. This may facilitate the positioning and alignment of the flow guide in the cavity of the die.

In a specific example, the flow guide may comprise a hole, and the die may comprise a corresponding hole. The flow guide may be arranged such that the hole of the flow guide and the hole of the die are aligned, and a pin may be inserted through both holes to align and fix the flow guide to the die.

In some examples, the system further comprises a coating roll to convey a substrate sheet. The coating roll and the die are positioned such that a first gap distance between the coating roll and the die is maintained; a second gap distance between the coating roll and an end of the protrusion portion outside of the die is maintained; and the first gap distance is larger than the second gap distance.

Here, any of the first gap distance and the second gap distance may be between about 20 µm and 500 µm, while the first gap distance remains larger than the second gap distance. Generally, the larger the gap distance, the thicker may be the material deposited on the substrate in a corresponding position. The coating roll may have a rotation axis around which the coating roll is configured to rotate, thereby conveying the substrate sheet. The coating roll may be arranged in relation to the die such that the rotation axis of the coating roll is perpendicular to the principal deposition direction. The distance between the coating roll and the die may be as specified above. The coating roll may include any of the corresponding features described below.

The substrate sheet may refer to the substrate and particularly to the electrode substrate as described above. The substrate sheet may be made of copper, nickel and/or aluminum. The material deposited on the substrate sheet may be part of a manufacturing process of an electrode of a secondary battery. The substrate may have a thickness of 2 µm to 100 µm, particularly 3 µm to 40 µm, and more particularly 4 µm to 10 µm.

In some examples, the system may further comprise a manifold and a supply system. The manifold may be formed in the die so as to communicate with the cavity. The supply system may be configured to supply the material to the die, and may be fluidly connected to the manifold. Particularly, the manifold may be configured to distribute the material that is received from the supply system. For example, the material may spread out within the manifold before filling the die. In specific examples, the manifold may be provided as a recessed portion in a bottom die (provided the die comprises two or more separate parts as described above) in terms of the gravitational pull. The supply system may be provided with a pump, a flow controller or the like to control the pressure under which the material is fed to the die and/or a flow rate at which the material is fed to the die.

In some examples, the manifold has an elongated shape along the width direction that is perpendicular to the principal deposition direction. In particular, the width direction is perpendicular also to a height direction. As such, the material received in the manifold may first spread out in the width direction before filling the cavity. This may be helpful for evenly distributing the material inside the cavity of the die before extruding from the die.

In some examples, a radius of the coating roll of the system may be increased locally in terms of an axis direction of the coating roll. For example, a tape having a thickness (dimension along a radial direction of the coating roll) of 5 µm to 100 µm, particularly 20 µm to 80 µm or 30 µm to 50 µm may be attached to the coating roll in a circumferential manner. The thickness, position and width (dimension along an axial direction of the coating roll) may be configured according to the material to be deposited and the product requirements.

Further provided is a system that is specifically adapted to manufacture a secondary battery. The system may comprise any of the system and its features as described above. In such a system, the material may be an active electrode material of a second battery. Particularly, the material may be an active positive electrode material of a second battery.

Further provided is a method for manufacturing a battery. The method may comprise depositing a material on a substrate by extrusion through an opening of a die, wherein a protrusion portion protrudes from the die through the opening towards the substrate.

The method is combined with, or carried out by, the system as described above, including any of the features of the system described above. In particular, any of the material, the substrate, the opening, the die and the protrusion portion in terms of the method may be as described above. The expressions depositing and extrusion may be as specified above.

Furthermore, any of the features disclosed herein with reference to the system may be also applicable to the method, even if not explicitly formulated as a procedural feature or a process step, unless indicated otherwise or technically inappropriate.

In some examples, the protrusion portion is provided as a single piece extending in the principal deposition direction from inside the cavity through the opening. In particular, the protrusion portion may be provided as a single linear piece extending linearly in the principal deposition direction. Herein, the term single piece may indicate particularly that the protrusion portion is not integral with a flow guide. In particular, the protrusion portion may terminate at a position a position inside the cavity and extend linearly from said position to the outside of the cavity through the opening. In this regard, any, some or each of the features described below in connection with the drawings may apply to the protrusion portion.

In some examples, the system further comprises a flow guide arranged in the cavity. The flow guide and the protrusion portion are physically separate from (that is, physically detached from and/or not integral with) each other. Being physically separate from each other, the protrusion portion and the flow guide may be provided each as separate (single) pieces and may not have any direct physical contact. Except from including the protrusion portion, the flow guide may include any of the corresponding features described herein.

In some examples, the protrusion portion is fixed to the die inside the cavity by means of a screw fastening. In particular, the die may comprise an upper die and a bottom die as described herein. The protrusion portion may be fixed to the upper die or the bottom die. The fixation of the protrusion portion to the die, particularly to the upper die or the bottom die, may be via a screw fastening. For example, a threaded hole may be formed in the die, particularly in the upper die or in the bottom die. The protrusion portion may comprise a corresponding through hole configured to receive a screw that is configured to screw-fit into the threaded hole.

In some examples, the die comprises an upper die and a bottom die configured to form the cavity therebetween with the protrusion portion interposed. The system may further comprise a manifold formed in the bottom die so as to communicate with the cavity. The protrusion portion is fixed to the upper die and extends from a position (inside the cavity) over the manifold in the principal deposition direction. In other examples, the protrusion portion may extend in the principal deposition direction from a position inside the cavity between the manifold and a backside of the die that is opposite to the opening of the die. In yet other examples, the protrusion portion may extend in the principal deposition direction from a position between the manifold and the opening of the die. In particular, in any of the above examples, the protrusion portion may extend linearly from the respective position in the cavity through the opening to the outside of the cavity.

In some examples, the system further comprises one or more further protrusion portions in addition to the protrusion portion. Each of the one or more further protrusion portions extending through the cavity and extending out of the opening. Each of the one or more further protrusion portions is provided as a single linear piece extending in the principal deposition direction from inside the cavity through the opening. Any, some or each of the features of the protrusion portion as described herein may be applicable also to each of the one or more further protrusion portions.

Further features of the system, and in particular of the protrusion portion may be given by the below description in connection with the drawings.

### BRIEF DESCRIPTION OF DRAWINGS

The accompanying drawings illustrate some particular examples and are intended to help understanding the present invention. Herein and in the drawings, a same reference sign or a series of reference signs may be used in different examples to indicate a same, similar or analogical element. In the following, same or like features that are present in different examples will not be repeatedly described. Instead, only the differences from the previously described examples will be described for the sake of brevity. Hence, the examples include all of the features that are described with reference to the respectively previous example, unless indicated otherwise or technically inappropriate.
FIG. 1A, 1B and 1C show a front view, a cross-sectional plan view and a cross-sectional side view, respectively, of a system according to an example.
FIG. 2 shows a perspective view of a die according to an example.
FIG. 3 shows a perspective view a system according to an example.
FIG. 4 shows a perspective view of a system according to an example.
FIG. 5A to 5E show a perspective view, a plan view, a front view and two cross-sectional side views of a system according to an example.
FIG. 6A and 6B show cross-sectional side views of a system according to an example.
FIG. 7A, 7B and 7C show a cross-sectional side view of a system, and a plan view and a side view of a protrusion member according to an example.
FIG. 8 shows a plan view of a system according to an example.
FIG. 9 shows a schematic plan view of a system according to an example.
FIG. 10 shows a schematic plan view of a system according to an example.
FIG. 11 shows a schematic perspective view of a system according to an example.
FIG. 12 shows a schematic cross-sectional view of a system according to an example.
FIG. 13 shows a schematic cross-sectional view of a system according to an example.

### DETAILED DESCRIPTION

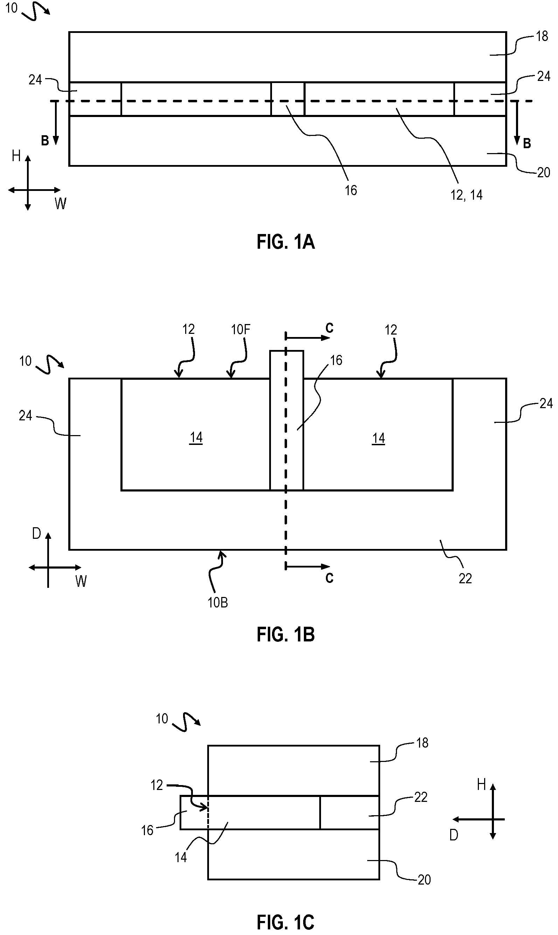

FIG. 1A shows a front view system according to an example. FIG. 1B shows a cross-sectional plan view of the system taken along the line B-B in FIG. 1A. FIG. 1C shows a cross-sectional side view of the system taken along the line C-C in FIG. 1B. Furthermore, a principal deposition direction D, a width direction W and a height direction H are indicated in FIG. 1A to 1C. The directions D, W and H are perpendicular to one another.

The system is configured to deposit a material, which particularly is or includes a positive electrode material of a secondary battery. The material may be as specified above. The system may the system as described above, or any of its examples including any corresponding features unless indicated otherwise or technically inappropriate. The system may be further suitable to carry out the method as disclosed herein.

The system comprises a die 10. The die 10 is configured to extrude the material along the principal deposition direction D through an opening 12 of the die 10. The die 10 comprises a cavity 14 that is fluidly connected to the opening 12 of the die 10. The cavity 14 is configured to receive the material. For this purpose, the cavity 14 may be fluidly connected to a supply system (not shown) that is configured to feed the material to the die 10.

The system further comprises a protrusion portion 16. The protrusion portion 16 is arranged in a cavity 14 of the die 10. The protrusion portion 16 extends through the cavity 14. The protrusion portion 16 elongates in the principal deposition direction D and extends out of the opening 12.

In the example shown in FIG. 1A to 1C, the die 10 comprises an upper die 18 and a bottom die 20. The upper and bottom dies 18, 20 may have a respective end face that face each other and are shaped and dimensioned in accordance with each other. That is, the lower end face of the upper die 18 may have a flat surface with an area size, and the upper end face of the bottom die 20 may have a flat surface with an area size equal to the area size of the lower end face of the upper die 18. As mentioned above, alternatively, the die 10 may comprise a single body in which the cavity 14 is formed so as to communicate with the opening 12 formed in a front side 10F of the die 10.

The die 10 comprises a base portion 22 elongated in the width direction W and expands over an entire width of the cavity 14 of the die 10. The base portion 22 is aligned to a backside 10B of the die 10. Furthermore, two separation portions 24 extend from the base portion 22 in the principal deposition direction D. The separation portions 24 each extend along a respective lateral boundary of the cavity 14 of the die 10.

In the example shown in FIG. 1A to 1C, the base portion 22 supports the upper die 18, thereby maintaining the cavity 14 of the die 10 between the upper die 18 and the bottom die 20. In particular, the height (i.e., a dimension in the height direction H) of the base portion 22 may be uniform and constant. The height of the cavity 14 of the die 10 may correspond to the height of the base portion 22. Furthermore, the separation portions 24 may have the same uniform height as the base portion 22. As such, the separation portion 24 may also support the upper die 18, thereby maintaining the cavity 14 of the die 10.

The material may be received from the supply system in the cavity 14. As the feeding of the material to the die 10 proceeds, the cavity 14 is filled with the material such that the material discharges from the cavity 14 through the opening 12 to the outside of the die 10. This may be referred to as extrusion. The material extruded from the die 10 being disposed on a substrate may be referred to as a deposition on the substrate.

When using the system as shown for the extrusion of the material, the above specified technical effects may be achieved due to the protrusion portion that extends through the cavity 14 and protrudes out of the die 10 through the opening 12.

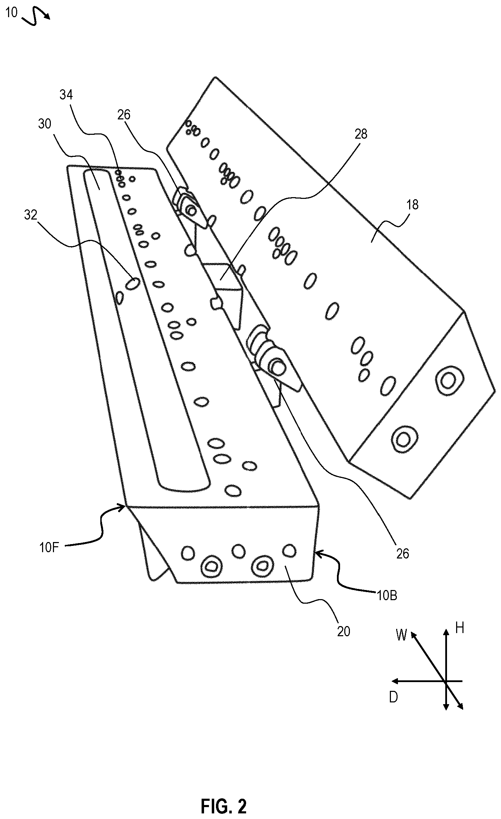

FIG. 2 shows a perspective view of a die 10 according to an example. The die 10 of the example in FIG. 2 also comprises an upper die 18 and a bottom die 20 that may be mechanically connected to each other via hinges 26 such that the upper die 18 and the bottom 20 may be pivotable with respect to each other.

Furthermore, the die 10 in FIG. 2 comprises an arrest member 28 on a backside 10B of the die 10. The arrest member 28 provides a surface that faces in the principal deposition direction D for a protrusion portion, a base portion or a flow guide to rest against, thereby fixing and/or aligning the protrusion portion to the die 10.

The die 10 in FIG. 2 further comprises a manifold 30 in the form of a recess elongating along the width direction W. The manifold 30 is fluidly connected to a feed port 32 which is fluidly connected to a supply system (not shown) to feed the material to the die 10. Accordingly, the material received in a cavity (not explicitly shown in FIG. 2, however applicable from FIG. 1A to 1C) between the upper die 18 and the bottom die 20 first spreads within the manifold 30 and then fills the cavity until the cavity is filled with material such that the material discharges from the die 10 through an opening 12 (not explicitly shown in FIG. 2, however applicable from FIG. 1A to 1C) at a front side 10F of the die 10.

The die 10 in FIG. 2 further comprises multiple fixation holes 34 distributed over end faces of the upper die 18 and the bottom die 20. The fixation holes 34 may be used to fix any of a protrusion portion, a base portion, a separation portion and a flow guide, as described above.

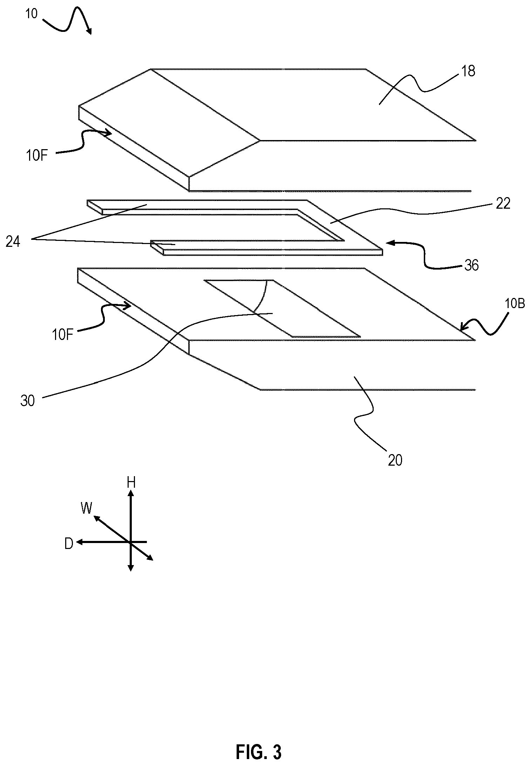

FIG. 3 shows a perspective view of a die 10 according to an example. The die 10 in FIG. 3 also comprises an upper die 18 and a bottom die 20, which are physically and mechanically separate from each other.

The die 10 in FIG. 3 further comprises a flow guide 36 as a single piece member that is physically separate from the die 10, in particular physically separate from the upper die 18 and from the bottom die 20. The flow guide 36 comprises a base portion 22 and two separation portions 24 that extend from the base portion in the principal deposition direction D. The flow guide 36 has a uniform height, i.e., the base portion 22 and the separation portions 24 have a same and uniform height.

Accordingly, the cavity of the die 10 in FIG. 3 (not explicitly shown in FIG. 3, however applicable from FIG. 1A to 1C) is formed and maintained by the flow guide 36 being interposed between the upper die 18 and the lower die 20. In particular, the uniform height of the flow guide 36 determines the height of the cavity between the upper die 18 and the lower die 20.

Further in FIG. 3, the base portion 22 elongates along the width direction W and is arranged in a position behind a manifold 30 in terms of the principal deposition direction D. Further, the separation portions 24 elongate along the principal deposition direction D and are arranged along a boundary of the cavity between the upper die 18 and the lower die 20. As such, the flow guide 36 prevents that the material that flows from the manifold 30 into the cavity between the upper die 18 and the lower die 20 flows in the width direction W or against the principal deposition direction D (i.e., backwards towards a backside 10B of the die).

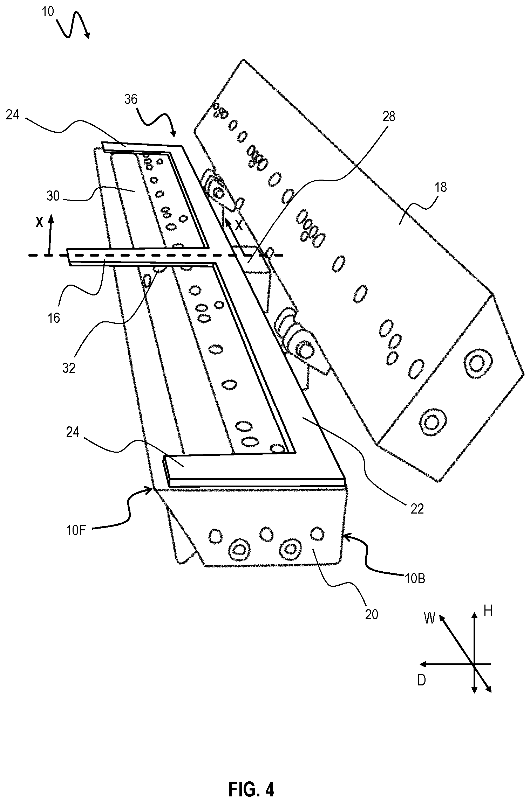

FIG. 4 shows a perspective view of a system according to an example. The system of FIG. 4 comprises a die 10 which resembles that of the example shown in in FIG. 2, and a repetition of same or like features is omitted.

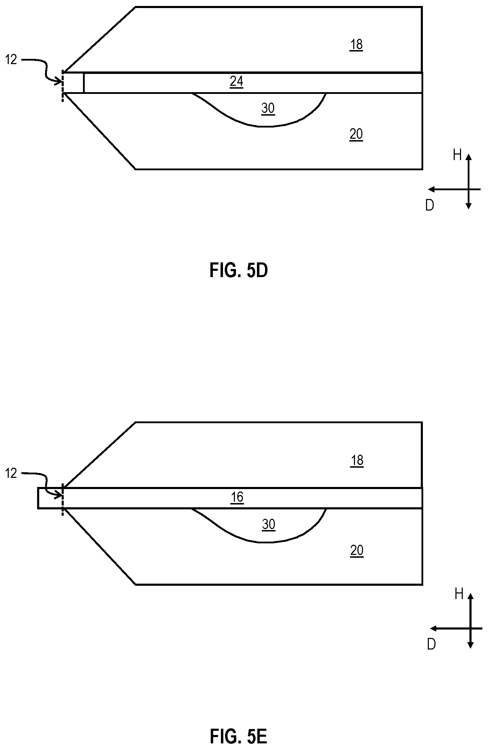

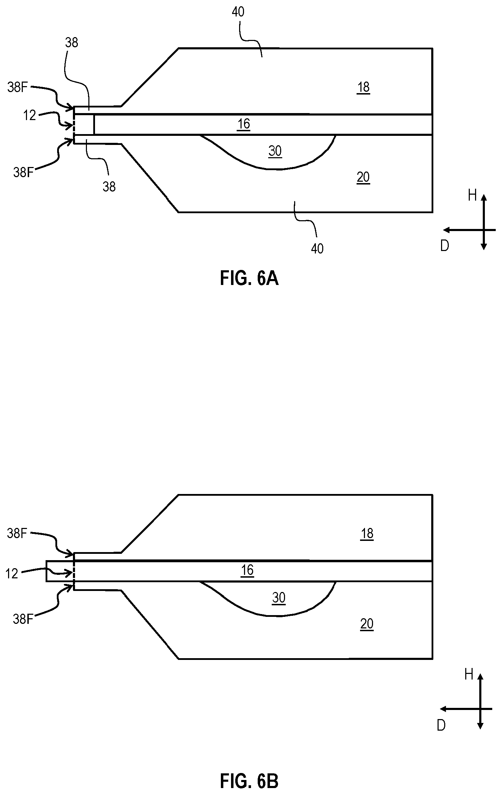

In FIG. 4, the system comprises a flow guide 36 which may include all the features as described above with reference to FIG. 3. Furthermore, the flow guide 36 comprises a protrusion portion 16 that is formed as an integral part of the flow guide 36. The protrusion portion 16 may be include any of the features described above, in particular with reference to FIG. 1. The protrusion portion 16 extends from a base portion 22 of the flow guide 36 in the principal deposition direction D and protrudes from the cavity through an opening of the die 10 to the outside of the die 10. The dashed line X-X in FIG. 4 indicates a cross-sectional side view, which may be given in FIG. 5E or FIG. 6B as described in detail below.

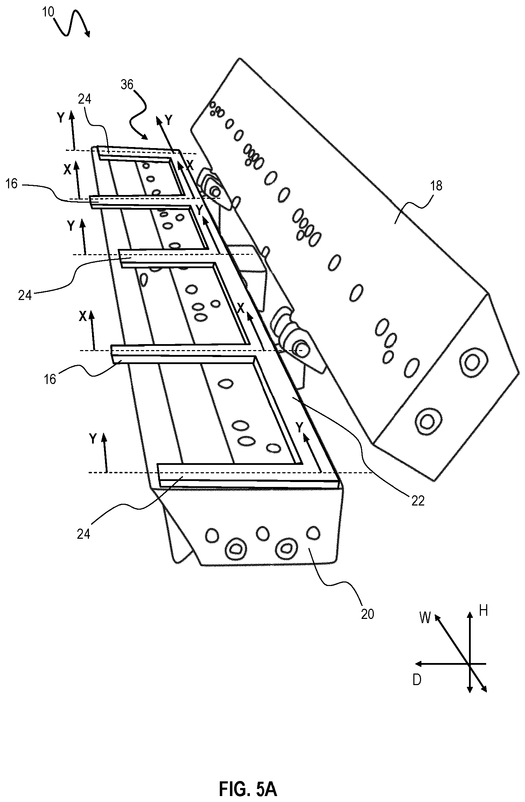

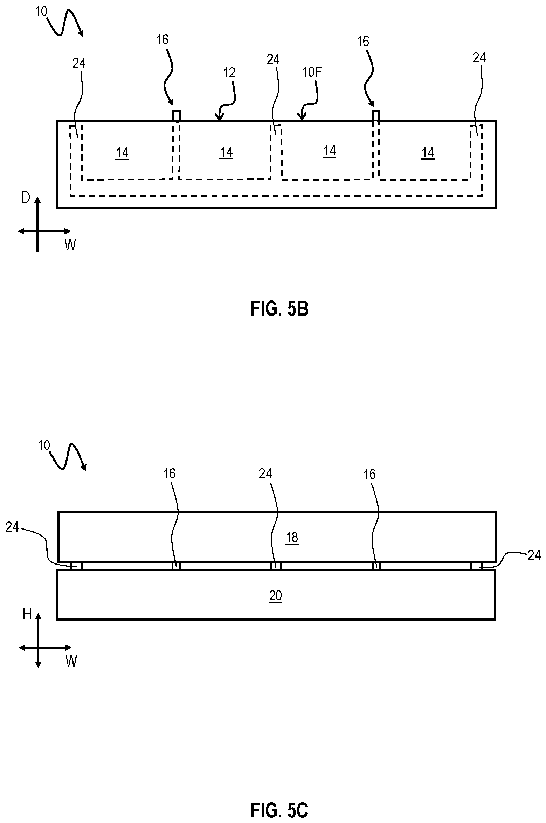

FIG. 5A shows a perspective view of a system according to an example. FIG. 5B shows a plan view of the example of FIG. 5A. FIG. 5C shows a front view of the example of FIG. 5A. FIG. 5D shows a cross-sectional side view taken along Y-Y in FIG. 5A. FIG. 5E shows a cross-sectional side view taken along X-X in FIG. 5A.

The system of FIG. 5A to 5E comprises a die 10 which resembles that of the example shown in in FIG. 2 and FIG. 4, and a repetition of same or like features that have already been described is omitted.

The system of FIG. 5A comprises a flow guide 36 that has in total two protrusion portions 16 and three separation portions 24. The separation portions 24 each extend from the base portion 22 in the principal deposition direction D so as to entirely remain inside the cavity between the upper die 18 and the bottom die 20. The protrusion portions 16 each extend from the base portion 22 in the principal deposition direction D so as to extend out of the cavity between the upper die 18 and the bottom die 20 and thus to protrude from the die 10.

Furthermore, the protrusion portions 16 and the separation portions 24 may have individual widths that are different from one another, as can be seen properly in FIG. 5B and 5C. the individual widths may be configured based on the material to be extruded and the production requirements. A distance between the neighboring protrusion portions 16 and separation portions 24 may be individually varied based on the material to be extruded and the production requirements.

As shown in FIG. 5D and 5E, the separation portions 24 extends in the principal deposition direction D so as to completely remain inside the cavity, i.e., not to extend beyond the opening 12 of the die 10. The protrusion portions 16, in contrast, extend in the principal deposition direction D so as to extend beyond the opening 12 of the die 10 to the outside of the die 10.

FIG. 6A and 6B each show a cross-sectional side view of a different example of a system. FIG. 6A may be a cross-sectional view taken along the lines Y-Y in FIG. 5A. FIG. 6B may be a cross-sectional view taken along the lines X-X in FIG. 4 or FIG. 5A. The example shown in FIG. 6A and 6B may also include the features as previously described, in particular with reference to FIG. 5D and 5E. The example in FIG. 6A and 6B differ from the above in that an upper die 18 and a bottom die 20 each comprise a respective lip portion 38 that protrude from a respective body portion 40 in the principal deposition direction D. The lip portions 38 have a reduced height in comparison to the respective body portions 40 of the upper die 18 and the bottom die 20. Front sides of the lip portions 38 may define the front side of the die 10. The opening 12 of the die 10 may be formed between the front sides of the lip portions 38.

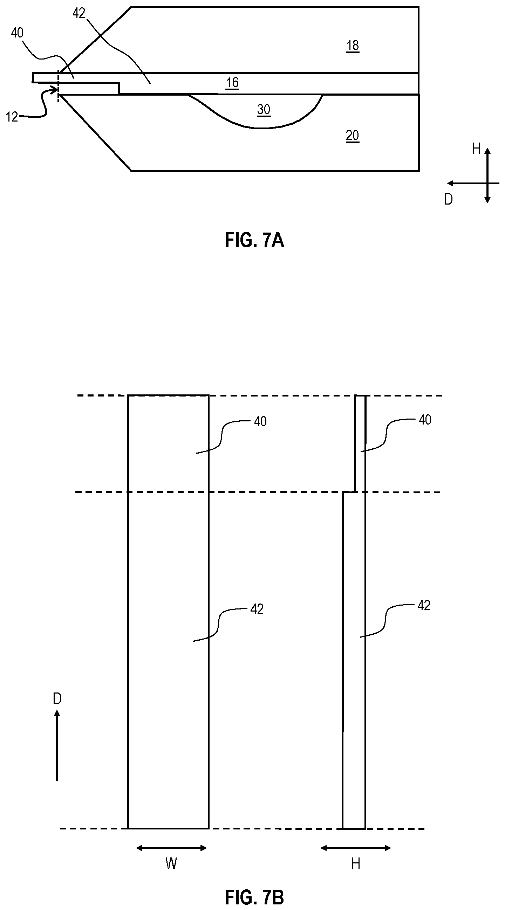

FIG. 7A shows a cross-sectional side view of a system according to an example. FIG. 7A may be a cross-sectional view taken along the lines X-X in FIG. 4 or FIG. 5A. FIG. 7B shows a plan view and a side view of the protrusion portion of FIG. 7A. The example shown in FIG. 7A may also include the features as previously described, in particular with reference to FIG. 5E and 6B.

Additionally, the protrusion portion 16 of FIG. 7A and 7B comprises a tip portion 40 and a support portion 42. The support portion 42 extends from a base portion (not shown in FIG. 7A) and has a height corresponding to (or defines) the height of the cavity of the die. The tip portion 40 extends from the support portion 42 in the principal deposition direction D. The tip portion 40 partially protrudes from the opening 12 of the die 10 to the outside of the die 10. The tip portion has a reduced height in comparison to the support portion 42 of the protrusion portion 16.

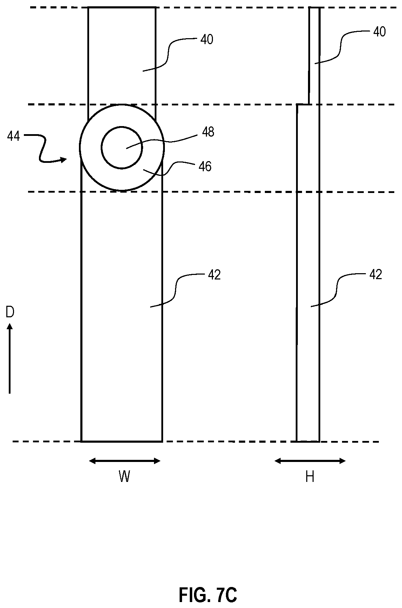

FIG. 7B and FIG. 7C show different examples of a protrusion portion 16 corresponding to the example shown in FIG. 7A.

In both examples FIG. 7B and 7C, the support portion 42 may have a height of 1.0 mm, 1.5 mm, 2.0 mm, 2.5 mm, 3.0 mm, 3.5 mm, 4.0 mm, 4.5 mm, or 5.0 mm, or any other values between 1.0 mm and 5.0 mm in 0.1 mm steps.

In both examples FIG. 7B and 7C, the tip portion 40 may have a reduced height, for example 0.5 mm, 1.0 mm, 1.5 mm, 2.0 mm, or 2.5 mm, or any other values between 0.5 mm and 4.5 mm in 0.1 mm steps.

While the protrusion portion shown in FIG. 7B has a constant and uniform width, the protrusion portion shown in FIG. 7C has a fixation portion 44 that comprises a ring portion 46 encircling a circular opening 48. The widths of the tip portion 40 and the support portion 42, and the diameter of the ring portion 46 may be different from one another. For example, the width of the tip portion 40 may be between 5 mm and 30 mm in 1 mm steps. For example, the width of the support portion 42 may be between 5 mm and 30 mm in 1 mm steps. In particular, the width of the tip portion 40 may be smaller than the width of the support portion 42.

Furthermore, the diameter of the ring portion 46 may be between 5 mm and 30 mm in 1 mm steps. In particular, the diameter of the ring portion 46 may be larger than the width of the tip portion 40 and/or larger than the width of the support portion 42.

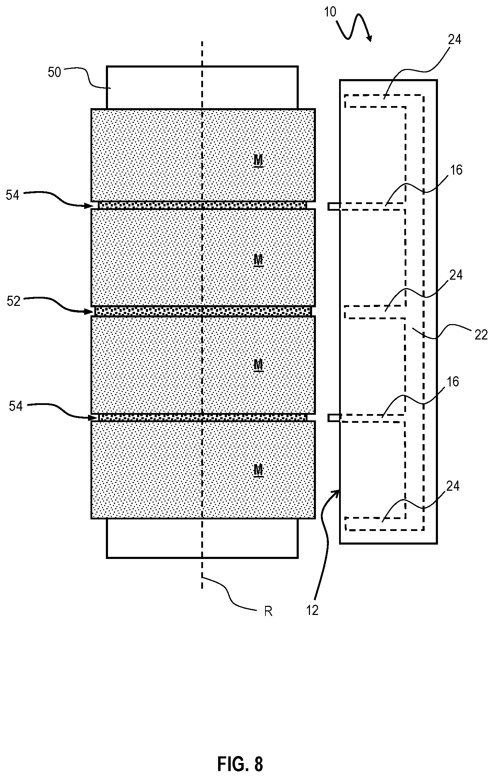

FIG. 8 shows a plan view of a system according to an example. The system of FIG. 8 comprises a coating roll 50 that is configured to rotate around a rotation axis R. The coating roll 50 and the die 10 may be arranged as described above.

The die 10 in the example of FIG. 8 may be or include any of the examples described above with reference to FIG. 5A to 7C. A substrate, such as an electrode substrate made of Cu or Al, may be conveyed on the coating roll 50. While the coating roll 50 rotates around the rotation axis R, the die 10 may extrude the material through its opening 12 in the above described manner.

As schematically shown in FIG. 8, in areas where neither the separation portions 24 nor the protruding portions 16 are present, the material M is deposited on the substrate conveyed on the coating roll 50. In a position 52 corresponding to the separation portion 24 located in the middle (in terms of the width direction W), the thickness of the material M deposited on the substrate is reduced in comparison to the areas where the separation portions are not present.

In positions 54 corresponding to the protrusion portions 16, the thickness of the material M deposited on the substrate is further reduced in comparison to the positions 52 corresponding to the separation portions 24. Accordingly, a complex thickness profile may be configurable in a precise manner.

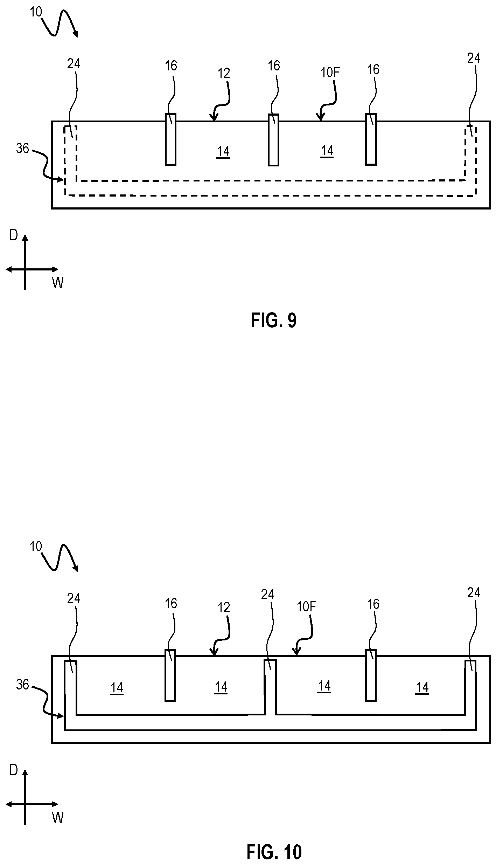

FIG. 9 shows a schematic plan view of a system according to another example. In particular, a cross-sectional plan view of an inside of the cavity of a die is shown. In the example shown in FIG. 9, multiple protrusion portions 16 are provided as single pieces. In particular, one, some or all of the protrusion portions 16 may not be integral with a flow guide 36. In the example of FIG. 9, each of the protrusion portions 16 is formed as a single piece not integral with the flow guide 36. It is noted that a flow guide 36 may be optional in such examples, as implied by dashed lines in FIG. 9. The protrusion portions 16 may be physically detached (separate) from the flow guide 36 (if present). In other words, one, some or all of the protrusion portions 16 may not be physically connected to the flow guide 36. Furthermore, the protrusion portions 16 may be physically detached (separate) from one another as shown in FIG. 9.

One, some or each of the protrusion portions 16 as shown in FIG. 9 may comprise any of the corresponding above-described features. In particular, one, some or each of the protrusion portions 16 may protrude out of (from) the cavity 14 of the die 10 (not explicitly shown in FIG. 9) through the opening 12 of the die 10.

The number of the protrusion portions in a system as disclosed herein is not limited to any specific number. The number of the protrusion portions may depend on the specifications of the battery manufacturing process and/or the product (i.e., a battery or a part thereof) to be manufactured. Accordingly, it is a mere example that three protrusion portions 16 are depicted in FIG. 9.

In some examples, one, some or each of the protrusion portions 16 may be attached and/or fixed to the die 10. In particular, one, some or each of the protrusion portions 16 may be attached and/or fixed to a surface of the die 10 inside the cavity 14. In specific examples, one, some or each of the protrusion portions 16 may be attached and/or fixed to the upper die 18 (as for example shown in FIG. 2), in particular to a lower surface of the upper die 18 that forms the cavity 14. Alternatively or additionally, one (other), some (other) or each of the protrusion portions 16 may be attached and/or fixed to the bottom die 20 (as for example shown in FIG. 2), in particular to an upper surface of the bottom die 20 that forms the cavity 14. The (one, some or each of the) protrusion portions 16 may be attached to the die 10, the upper die 18 and/or the bottom die 20 by any proper means, including for example by adhesion, welding, riveting, screw fastening or a combination thereof.

By fixing one or more protrusion portions to the die in any of the above-described manner, a problem that the protrusion portion may be bent or displaced during the deposition process may be suppressed or prevented. Thus, the efficiency for the manufacturing of a battery may be increased.

FIG. 10 shows a schematic plan view of a system according to a further example. Specifically, a cross-sectional plan view of an inside of the cavity of a die is shown. In the example shown in FIG. 10, two protrusion portions 16 are provided as single pieces and separate from a flow guide 36. The flow guide 36 may be optional. In this example, the protrusion portions 16 are not integral with the flow guide 36 (if present). The protrusion portions 16 may be physically detached (separate) from the flow guide 36 (if present). The protrusion portions 16 may be physically detached (separate) from each other as shown in FIG. 10.

In the example of FIG. 10, two protrusion portions 16 are provided that are arranged in an alternating manner with three separation portions 24 in the width direction W. In the example, the separation portion 24 are formed integrally with the flow guide 36 and extend in the principal deposition direction D inside the cavity 14. Alternatively, the flow guide 36 and/or the separation portions 24 may be optional. Any, some or all of the features of the protrusion portions 16 described above with respect to the example shown in FIG. 9 may apply to the example of FIG. 10 as well. In particular, the protrusion portions of FIG. 10 may be attached and/or fixed to the die 10, particularly to the upper die 18 and/or the bottom die 20 in the above-described manner.

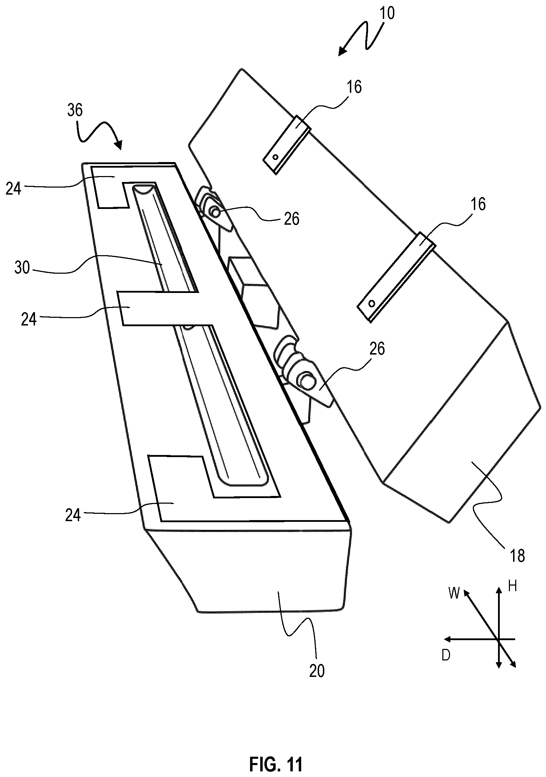

FIG. 11 shows a schematic perspective view of a system according to an example, which may overlap with the example as described in connection with FIG. 10. As shown in Fig. 11, the flow guide 36 may be arranged between the bottom die 20 and the upper die 18 of the die 10. In particular, the flow guide 36 may be laid on the bottom die 20 and the upper die 18 may be moved onto the flow guide 36 (e.g., by pivoting the upper die 18 about the hinges 26), thereby obtaining a cavity 14 between the bottom die 20 and the upper die 18 with the flow guide 36 placed therebetween.

In the example shown in FIG. 11, protrusion portions 16 may be attached and fixed to a surface of the upper die 18 that faces the bottom die 20 in a closed state of the die 10. The protrusion portions 16 may be provided as single pieces separate (physically detached) from the flow guide 36. The flow guide may comprise one or more separation portions 24 extending in the principal deposition direction D. Two protrusion portions 16 are depicted in the example of FIG. 11. The number of the protrusion portions 16 may vary depending on the specifications of the manufacturing process and the product requirements. Any, some or all of the features of the protrusion portions 16 described above with respect to the example shown in FIG. 9 may apply to the example of FIG. 11 as well.

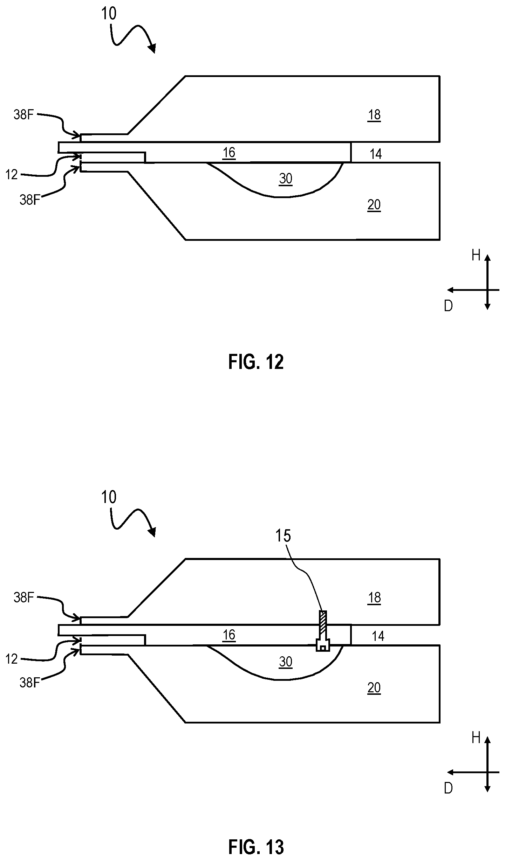

The protrusion portions 16 may be fixed to the upper die 18 in any of the above-described manner. In particular, the protrusion portions 16 may be fixed to the upper die 18 by screw fastening, for example as described in detail below in connection with FIG. 13.

FIG. 12 shows a schematic cross-sectional side view of a system, particularly a die according to an example. The view as shown in FIG. 12 may be in accordance with any of the examples shown in FIG. 9, 10 and 11. In FIG. 12, a protrusion portion 16 is shown that extends out of the cavity 14 of the die 10 (that is formed between the upper die 18 and the bottom die 20) through the opening 12. In some examples, the protrusion portion 16 may extend (in the principal deposition direction D) from a position over the manifold 30. In other examples, the protrusion portion 16 may extend (in the principal deposition direction D) from a position between the manifold and a backside of the die 10 (that is, a side of the die 10 opposite to the opening 12). In other examples, the protrusion portion 16 may extend (in the principal deposition direction D) from a position between the manifold 30 and the opening 12. In addition, any, some or all of the features of the protrusion portions 16 described above with respect to the example shown in FIG. 9 may apply to the example of FIG. 12 as well.

FIG. 13 shows a schematic cross-sectional side view of a system, particularly a die according to an example. The view as shown in FIG. 13 may be in accordance with any of the examples described above, and in particular with the examples shown in FIG. 9, 10, 11 and 13. In FIG. 13, a protrusion portion 16 is shown that extends out of the cavity 14 of the die 10 (that is formed between the upper die 18 and the bottom die 20) through the opening 12. The protrusion portion 16 may be at least one position fixed to the die 20, specifically to the upper die 18 or to the lower die 20, by means of a screw fastening. For this purpose, for example, a threaded hole may be formed in one of the upper die 18 and the bottom die 20, which is configured to receive a screw 15 in a fastening manner. Furthermore, the protrusion portion 16 may have a through hole to receive the screw 15. In a specific example, the threaded hole may be formed in the lower surface of the upper die 18 at a position corresponding to the manifold 30 so as to allow a screw head of the screw 15 to be arranged in the manifold when the die 10 is closed as shown in FIG. 13. In the example of FIG. 13, one single screw is shown. In other examples (not shown), the protrusion portion 16 may be fixed to the upper die 18 or the bottom die 18 using two, three or more screws. The example shown in FIG. 13 may apply to any of the examples described herein. In addition, any, some or all of the features of the protrusion portions 16 described above with respect to the example shown in FIG. 9 may apply to the example of FIG. 13 as well.

## Claims

1. A system for depositing a material on a substrate, the system comprising a die (10) for extruding the material along a principal deposition direction through an opening (12) of the die (10), wherein the die (10) comprises:
a cavity (14) for receiving the material, the cavity (14) being fluidly connected to the opening (12) of the die (10); and
a base portion (22) aligned to a backside (10B) of the die (10), the base portion (22) being elongated in a width direction (W) perpendicular to the principal deposition direction and expanding over an entire width of the cavity (14), and two separation portions (24) each extending from the base portion (22) in the principal deposition direction along a respective lateral boundary of the cavity (14) of the die (10);
the system being **characterized by**
a protrusion portion (16) arranged in the cavity (14) for shaping a flow of the material extruded from the die (10), the protrusion portion (16) extending through the cavity (14) and extending out of the opening (12), wherein the die (10) is configured to deposit material (M) with a reduced thickness in a position on the substrate corresponding to a size and a position of the protrusion portion (16).

2. The system of claim 1,
wherein the protrusion portion (16) is provided as a single piece extending in the principal deposition direction from inside the cavity (14) through the opening (12).

3. The system of claim 2, further comprising:
a flow guide (36) arranged in the cavity (14), wherein the flow guide (36) and the protrusion portion (16) are physically separate from each other.

4. The system of claim 2 or 3,
wherein the protrusion portion (16) is fixed to the die (10) inside the cavity (14) by means of a screw fastening.

5. The system of any of claims 2 to 4, further comprising:
one or more further protrusion portions (16) in addition to the protrusion portion (16), each of the one or more further protrusion portions (16) extending through the cavity (14) and extending out of the opening (12),
wherein each of the one or more further protrusion portions (16) is provided as a single linear piece extending in the principal deposition direction from inside the cavity (14) through the opening (12).

6. The system of any of claims 2 to 5,
wherein the die (10) comprises an upper die (18) and a bottom die (20) configured to form the cavity therebeween with the protrusion portion (16) interposed,
wherein the system further comprises a manifold (30) formed in the bottom die (20) so as to communicate with the cavity (14),
wherein the protrusion portion (16) is fixed to the upper die (18) and extends from a position (52, 54) over the manifold (30) in the principal deposition direction.

7. The system of claim 1, further comprising:
wherein the protrusion portion (16) is physically connected to the base portion (22) and extends from the base portion (22) through the opening (12) to the outside of the die (10).

8. The system of claim 7,
wherein the base portion (22) has an elongated shape along a width direction perpendicular to the principal deposition direction,
wherein the protrusion portion (16) has an elongated shape along the principal deposition direction.

9. The system of claim 7 or 8,
wherein the protrusion portion (16) has a tip portion (40) that has a thickness smaller than a height of the opening (12),
wherein at least a part of the tip portion (40) is arranged outside of the die (10).

10. The system of any of claims 7 to 9, further comprising:
one or more separation portions elongating from the base portion (22) along the principal deposition direction inside the cavity (14).

11. The system of any of the preceding claims, further comprising:
at least one additional protrusion portion (16) extending through the cavity (14) and out of the opening (12) of the die (10).

12. The system of any of the preceding claims,
wherein the cavity (14) has a uniform height in a thickness direction perpendicular to the principal deposition direction,
wherein a thickness of the base portion (22) is equal to the height of the cavity (14).

13. The system of any of the preceding claims, further comprising:
a flow guide (36) partly arranged in the cavity (14), wherein the protrusion portion (16) is part of the flow guide (36),
wherein the flow guide (36) has one or more positioning features for alignment and/or fixation of the flow guide (36) to the die (10).

14. The system of any of the preceding claims,
wherein the protrusion portion (16) is provided so as to be removable from the die (10), or
wherein the protrusion portion (16) is an integral part of the die (10).

15. The system of any of the preceding claims,
wherein the opening (12) has a slit-shape elongated along a width direction perpendicular to the principal deposition direction,
wherein the opening (12) and the cavity (14) has a same uniform height in a height direction perpendicular to the width direction and the principal deposition direction.

16. The system of any of the preceding claims, further comprising:
a coating roll (50) to convey a substrate sheet, wherein the coating roll (50) and the die (10) are positioned such that:
- a first gap distance between the coating roll (50) and the die (10) is maintained,
- a second gap distance between the coating roll (50) and an end of the protrusion portion (16) outside of the die (10) is maintained, and
- the first gap distance is larger than the second gap distance.

17. The system of any of the preceding claims, further comprising:
a manifold (30) formed in the die (10) so as to communicate with the cavity (14); and
a supply system configured to supply the material to the die (10), the supply device being fluidly connected to the manifold (30).

18. The system of claim 17,
wherein the manifold (30) has an elongated shape along a width direction perpendicular to the principal deposition direction.

19. The system of any of the preceding claims, wherein the system is adapted to manufacture a secondary battery,
wherein the material is an active electrode material, particularly an active positive electrode material, of a secondary battery.

20. A method for manufacturing a battery, comprising:
depositing a material on a substrate by extrusion through an opening (12) of a die (10) of the system of any one of the preceding claims between two separation portions (24) each extending along a respective lateral boundary of a cavity (14) of the die (10),
wherein a protrusion portion protrudes from the die (10) through the opening (12) towards the substrate, such that the material (M) is deposited with a reduced thickness in a specific position on the substrate corresponding to a position and a width of the protrusion portion (16).

## Patentansprüche

1. System zum Abscheiden eines Materials auf einem Substrat, wobei das System einen Die (10) zum Extrudieren des Materials entlang einer Hauptabscheidungsrichtung durch eine Öffnung (12) des Die (10) umfasst, wobei der Die (10) Folgendes umfasst:
einen Hohlraum (14) zum Aufnehmen des Materials, wobei der Hohlraum (14) fluidisch mit der Öffnung (12) des Die (10) verbunden ist; und
einen Basisabschnitt (22), der mit einer Rückseite (10B) des Die (10) ausgerichtet ist, wobei der Basisabschnitt (22) in einer Breitenrichtung (W) senkrecht zu der Hauptabscheidungsrichtung länglich ist und sich über eine gesamte Breite des Hohlraums (14) ausdehnt, und zwei Trennabschnitte (24), die sich jeweils von dem Basisabschnitt (22) in der Hauptabscheidungsrichtung entlang einer jeweiligen seitlichen Begrenzung des Hohlraums (14) des Die (10) erstrecken;
wobei das System **gekennzeichnet ist durch**
einen Vorsprungsabschnitt (16), der in dem Hohlraum (14) zum Formen eines Flusses des aus dem Die (10) extrudierten Materials angeordnet ist, wobei sich der Vorsprungsabschnitt (16) durch den Hohlraum (14) erstreckt und sich aus der Öffnung (12) heraus erstreckt, wobei der Die (10) eingerichtet ist, Material (M) mit einer reduzierten Dicke an einer Position auf dem Substrat abzuscheiden, die einer Größe und einer Position des Vorsprungsabschnitts (16) entspricht.

2. System nach Anspruch 1,
wobei der Vorsprungsabschnitt (16) als ein einzelnes Teil bereitgestellt ist, das sich in der Hauptabscheidungsrichtung von innerhalb des Hohlraums (14) durch die Öffnung (12) erstreckt.

3. System nach Anspruch 2, ferner umfassend:
eine Flussführung (36), die in dem Hohlraum (14) angeordnet ist, wobei die Flussführung (36) und der Vorsprungsabschnitt (16) physisch voneinander getrennt sind.

4. System nach Anspruch 2 oder 3,
wobei der Vorsprungsabschnitt (16) an dem Die (10) innerhalb des Hohlraums (14) mittels einer Schraubbefestigung befestigt ist.

5. System nach einem der Ansprüche 2 bis 4, ferner umfassend:
einen oder mehrere weitere Vorsprungsabschnitte (16) zusätzlich zu dem Vorsprungsabschnitt (16), wobei sich jeder des einen oder der mehreren weiteren Vorsprungsabschnitte (16) durch den Hohlraum (14) erstreckt und sich aus der Öffnung (12) heraus erstreckt,
wobei jeder des einen oder der mehreren weiteren Vorsprungsabschnitte (16) als ein einzelnes lineares Teil bereitgestellt ist, das sich in der Hauptabscheidungsrichtung von innerhalb des Hohlraums (14) durch die Öffnung (12) erstreckt.

6. System nach einem der Ansprüche 2 bis 5,
wobei der Die (10) einen oberen Die (18) und einen unteren Die (20) umfasst, die eingerichtet sind, den Hohlraum dazwischen zu bilden, wobei der Vorsprungsabschnitt (16) dazwischen angeordnetet ist,
wobei das System ferner einen Verteiler (30) umfasst, der in dem unteren Die (20) gebildet ist, um mit dem Hohlraum (14) zu kommunizieren,
wobei der Vorsprungsabschnitt (16) an dem oberen Die (18) befestigt ist und sich von einer Position (52, 54) über dem Verteiler (30) in der Hauptabscheidungsrichtung erstreckt.

7. System nach Anspruch 1, ferner umfassend:
wobei der Vorsprungsabschnitt (16) physisch mit dem Basisabschnitt (22) verbunden ist und sich von dem Basisabschnitt (22) durch die Öffnung (12) zu der Außenseite des Die (10) erstreckt.

8. System nach Anspruch 7,
wobei der Basisabschnitt (22) eine längliche Form entlang einer Breitenrichtung senkrecht zu der Hauptabscheidungsrichtung aufweist,
wobei der Vorsprungsabschnitt (16) eine längliche Form entlang der Hauptabscheidungsrichtung aufweist.

9. System nach Anspruch 7 oder 8,
wobei der Vorsprungsabschnitt (16) einen Spitzenabschnitt (40) aufweist, der eine Dicke aufweist, die kleiner als eine Höhe der Öffnung (12) ist,
wobei zumindest ein Teil des Spitzenabschnitts (40) außerhalb des Die (10) angeordnet ist.

10. System nach einem der Ansprüche 7 bis 9, ferner umfassend:
einen oder mehrere Trennabschnitte, die sich von dem Basisabschnitt (22) entlang der Hauptabscheidungsrichtung innerhalb des Hohlraums (14) erstrecken.

11. System nach einem der vorhergehenden Ansprüche, ferner umfassend:
mindestens einen zusätzlichen Vorsprungsabschnitt (16), der sich durch den Hohlraum (14) und aus der Öffnung (12) des Die (10) heraus erstreckt.

12. System nach einem der vorhergehenden Ansprüche,
wobei der Hohlraum (14) eine einheitliche Höhe in einer Dickenrichtung senkrecht zu der Hauptabscheidungsrichtung aufweist,
wobei eine Dicke des Basisabschnitts (22) gleich der Höhe des Hohlraums (14) ist.

13. System nach einem der vorhergehenden Ansprüche, ferner umfassend:
eine Flussführung (36), die teilweise in dem Hohlraum (14) angeordnet ist, wobei der Vorsprungsabschnitt (16) Teil der Flussführung (36) ist,
wobei die Flussführung (36) ein oder mehrere Positionierungsmerkmale zur Ausrichtung und/oder Befestigung der Flussführung (36) an dem Die (10) aufweist.

14. System nach einem der vorhergehenden Ansprüche,
wobei der Vorsprungsabschnitt (16) derart bereitgestellt ist, um von dem Die (10) entfernbar zu sein, oder
wobei der Vorsprungsabschnitt (16) ein integraler Teil des Die (10) ist.

15. System nach einem der vorhergehenden Ansprüche,
wobei die Öffnung (12) eine Schlitzform aufweist, die sich entlang einer Breitenrichtung senkrecht zu der Hauptabscheidungsrichtung erstreckt,
wobei die Öffnung (12) und der Hohlraum (14) eine gleiche einheitliche Höhe in einer Höhenrichtung senkrecht zu der Breitenrichtung und der Hauptabscheidungsrichtung aufweisen.

16. System nach einem der vorhergehenden Ansprüche, ferner umfassend:
eine Beschichtungswalze (50) zum Befördern eines Substratblatts, wobei die Beschichtungswalze (50) und der Die (10) so positioniert sind, dass:
- ein erster Spaltabstand zwischen der Beschichtungswalze (50) und dem Die (10) aufrechterhalten wird,
- ein zweiter Spaltabstand zwischen der Beschichtungswalze (50) und einem Ende des Vorsprungsabschnitts (16) außerhalb des Die (10) aufrechterhalten wird, und
- der erste Spaltabstand größer als der zweite Spaltabstand ist.

17. System nach einem der vorhergehenden Ansprüche, ferner umfassend:
einen Verteiler (30), der in dem Die (10) gebildet ist, um mit dem Hohlraum (14) zu kommunizieren; und
ein Zuführsystem, das eingerichtet ist, das Material dem Die (10) zuzuführen, wobei die Zuführvorrichtung fluidisch mit dem Verteiler (30) verbunden ist.

18. System nach Anspruch 17,
wobei der Verteiler (30) eine längliche Form entlang einer Breitenrichtung senkrecht zu der Hauptabscheidungsrichtung aufweist.

19. System nach einem der vorhergehenden Ansprüche, wobei das System eingerichtet ist, eine sekundäre Batterie herzustellen,
wobei das Material ein aktives Elektrodenmaterial, insbesondere ein aktives positives Elektrodenmaterial, einer sekundären Batterie ist.

20. Verfahren zum Herstellen einer Batterie, umfassend:
Abscheiden eines Materials auf einem Substrat durch Extrusion durch eine Öffnung (12) eines Die (10) des Systems nach einem der vorhergehenden Ansprüche zwischen zwei Trennabschnitten (24), die sich jeweils entlang einer jeweiligen seitlichen Begrenzung eines Hohlraums (14) des Die (10) erstrecken,
wobei ein Vorsprungsabschnitt von dem Die (10) durch die Öffnung (12) in Richtung des Substrats vorsteht, so dass das Material (M) mit einer reduzierten Dicke an einer spezifischen Position auf dem Substrat abgeschieden wird, die einer Position und einer Breite des Vorsprungsabschnitts (16) entspricht.

## Revendications

1. Système de dépôt d'un matériau sur un substrat, le système comprenant une matrice (10) pour extruder le matériau le long d'une direction de dépôt principale à travers une ouverture (12) de la matrice (10), dans lequel la matrice (10) comprend :
une cavité (14) pour recevoir le matériau, la cavité (14) étant reliée fluidiquement à l'ouverture (12) de la matrice (10) ; et
une partie de base (22) alignée avec une partie arrière (10B) de la matrice (10), la partie de base (22) étant allongée dans une direction de largeur (W) perpendiculaire à la direction de dépôt principale et s'étendant sur une largeur totale de la cavité (14), et deux parties de séparation (24) s'étendant chacune depuis la partie de base (22) dans la direction de dépôt principale le long d'une limite latérale respective de la cavité (14) de la matrice (10) ;
le système étant **caractérisé par**
une partie en saillie (16) agencée dans la cavité (14) pour façonner un flux du matériau extrudé par la matrice (10), la partie en saillie (16) s'étendant à travers la cavité (14) et s'étendant hors de l'ouverture (12), dans lequel la matrice (10) est configurée pour déposer un matériau (M) ayant une épaisseur réduite dans une position sur le substrat correspondant à une dimension et une position de la partie en saillie (16).

2. Système selon la revendication 1,
dans lequel la partie en saillie (16) est fournie en une pièce unique s'étendant dans la direction de dépôt principale depuis l'intérieur de la cavité (14) à travers l'ouverture (12).

3. Système selon la revendication 2, comprenant en outre :
un guide de flux (36) agencé dans la cavité (14), dans lequel le guide de flux (36) et la partie en saillie (16) sont séparés physiquement l'un de l'autre.

4. Système selon la revendication 2 ou 3,
dans lequel la partie en saillie (16) est fixée à la matrice (10) à l'intérieur de la cavité (14) au moyen d'une fixation par vis.

5. Système selon l'une quelconque des revendications 2 à 4, comprenant en outre :
une ou plusieurs autres parties en saillie (16) en plus de la partie en saillie (16), la ou les autres parties en saillie (16) s'étendant chacune à travers la cavité (14) et s'étendant chacune hors de l'ouverture (12),
dans lequel la ou les autres parties en saillie (16) sont chacune fournies en une pièce linéaire unique s'étendant dans la direction de dépôt principale depuis l'intérieur de la cavité (14) à travers l'ouverture (12).

6. Système selon l'une quelconque des revendications 2 à 5,
dans lequel la matrice (10) comprend une matrice supérieure (18) et une matrice inférieure (20) configurées pour former la cavité entre celles-ci avec la partie en saillie (16) interposée,
dans lequel le système comprend en outre un collecteur (30) formé dans la matrice inférieure (20) afin de communiquer avec la cavité (14),
dans lequel la partie en saillie (16) est fixée à la matrice supérieure (18) et s'étend depuis une position (52, 54) sur le collecteur (30) dans la direction de dépôt principale.

7. Système selon la revendication 1, comprenant en outre :
dans lequel la partie en saillie (16) est reliée physiquement à la partie de base (22) et s'étend depuis la partie de base (22) à travers l'ouverture (12) vers l'extérieur de la matrice (10).

8. Système selon la revendication 7,
dans lequel la partie de base (22) a une forme allongée le long d'une direction de largeur perpendiculaire à la direction de dépôt principale,
dans lequel la partie en saillie (16) a une forme allongée le long de la direction de dépôt principale.

9. Système selon la revendication 7 ou 8,
dans lequel la partie en saillie (16) a une partie de pointe (40) qui a une épaisseur inférieure à une hauteur de l'ouverture (12),
dans lequel au moins une partie de la partie de pointe (40) est agencée à l'extérieur de la matrice (10).

10. Système selon l'une quelconque des revendications 7 à 9, comprenant en outre :
une ou plusieurs parties de séparation s'allongeant depuis la partie de base (22) le long de la direction de dépôt principale à l'intérieur de la cavité (14).

11. Système selon l'une quelconque des revendications précédentes, comprenant en outre :
une ou plusieurs autres parties en saillie (16) s'étendant à travers la cavité (14) et sortant par l'ouverture (12) de la matrice (10).

12. Système selon l'une quelconque des revendications précédentes,
dans lequel la cavité (14) a une hauteur uniforme dans une direction d'épaisseur perpendiculaire à la direction de dépôt principale,
dans lequel une épaisseur de la partie de base (22) est égale à la hauteur de la cavité (14).

13. Système selon l'une quelconque des revendications précédentes, comprenant en outre :
un guide de flux (36) agencé en partie dans la cavité (14), dans lequel la partie en saillie (16) fait partie du guide de flux (36),
dans lequel le guide de flux (36) a une ou plusieurs caractéristiques de positionnement pour l'alignement et/ou la fixation du guide de flux (36) à la matrice (10).

14. Système selon l'une quelconque des revendications précédentes,
dans lequel la partie en saillie (16) est fournie de façon à pouvoir être retirée de la matrice (10), ou
dans lequel la partie en saillie (16) fait partie intégrante de la matrice (10).

15. Système selon l'une quelconque des revendications précédentes,
dans lequel l'ouverture (12) a une forme allongée fendue le long d'une direction de largeur perpendiculaire à la direction de dépôt principale,
dans lequel l'ouverture (12) et la cavité (14) ont une hauteur uniforme identique dans une direction de hauteur perpendiculaire à la direction de largeur et à la direction de dépôt principale.

16. Système selon l'une quelconque des revendications précédentes, comprenant en outre :
un rouleau de revêtement (50) pour transporter une feuille de substrat, dans lequel le rouleau de revêtement (50) et la matrice (10) sont positionnées de telle sorte que :
- une première distance d'espace entre le rouleau de revêtement (50) et la matrice (10) est maintenue,
- une deuxième distance d'espace entre le rouleau de revêtement (50) et une extrémité de la partie en saillie (16) à l'extérieur de la matrice (10) est maintenue, et
- la première distance d'espace est supérieure à la deuxième distance d'espace.

17. Système selon l'une quelconque des revendications précédentes, comprenant en outre :
un collecteur (30) formé dans la matrice (10) afin de communiquer avec la cavité (14) ; et
un système d'alimentation configuré pour envoyer le matériau à la matrice (10), le dispositif d'alimentation étant relié fluidiquement au collecteur (30).

18. Système selon la revendication 17,
dans lequel le collecteur (30) a une forme allongée le long d'une direction de largeur perpendiculaire à la direction de dépôt principale.

19. Système selon l'une quelconque des revendications précédentes, dans lequel le système est adapté pour fabriquer une batterie rechargeable,
dans lequel le matériau est un matériau actif d'électrode, en particulier un matériau actif d'électrode positive, d'une batterie rechargeable.

20. Procédé de fabrication d'une batterie, consistant à :
déposer un matériau sur un substrat par extrusion à travers une ouverture (12) d'une matrice (10) du système selon l'une quelconque des revendications précédentes entre deux parties de séparation (24) s'étendant chacune le long d'une limite latérale respective d'une cavité (14) de la matrice (10),
dans lequel une partie en saillie dépasse de la matrice (10) à travers l'ouverture (12) vers le substrat, de telle sorte que le matériau (M) est déposé avec une épaisseur réduite dans une position spécifique sur le substrat correspondant à une position et une largeur de la partie en saillie (16).
